(19) Europäisches Patentamt / European Patent Office / Office européen des brevets

(11) **EP 3 636 787 B1**

(12) **EUROPEAN PATENT SPECIFICATION**

(45) Date of publication and mention
of the grant of the patent:
**26.01.2022 Bulletin 2022/04**

(21) Application number: **18805690.7**

(22) Date of filing: **18.05.2018**

(51) International Patent Classification (IPC):
| | |
|---|---|
| **C22C 38/00** (2006.01) | **B21D 51/16** (2006.01) |
| **C21D 8/10** (2006.01) | **C22C 38/58** (2006.01) |
| **F16L 9/02** (2006.01) | **C21D 9/08** (2006.01) |
| **C22C 38/02** (2006.01) | **C22C 38/04** (2006.01) |
| **C22C 38/06** (2006.01) | **C22C 38/08** (2006.01) |
| **C21D 1/25** (2006.01) | **C21D 6/00** (2006.01) |
| B21D 7/16 (2006.01) | B21D 35/00 (2006.01) |
| F16L 43/00 (2006.01) | C21D 1/34 (2006.01) |
| C21D 1/42 (2006.01) | C22C 38/18 (2006.01) |
| C22C 38/26 (2006.01) | C22C 38/28 (2006.01) |
| C22C 38/40 (2006.01) | C22C 38/48 (2006.01) |
| C22C 38/50 (2006.01) | C22C 38/20 (2006.01) |
| C22C 38/22 (2006.01) | C22C 38/24 (2006.01) |

(52) Cooperative Patent Classification (CPC):
**C22C 38/02; B21D 7/162; B21D 35/005;
C21D 1/25; C21D 6/005; C21D 6/008; C21D 8/10;
C21D 8/105; C21D 9/08; C21D 9/085; C22C 38/00;
C22C 38/04; F16L 43/001;** C21D 1/34; C21D 1/42;
(Cont.)

(86) International application number:
**PCT/JP2018/019414**

(87) International publication number:
**WO 2018/216638 (29.11.2018 Gazette 2018/48)**

(54) **BENT STEEL PIPE AND METHOD FOR PRODUCING SAME**

GEBOGENES STAHLROHR UND VERFAHREN ZUR HERSTELLUNG DAVON

TUBE EN ACIER CINTRÉ ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.05.2017 JP 2017100993**

(43) Date of publication of application:
**15.04.2020 Bulletin 2020/16**

(73) Proprietor: **Nippon Steel Corporation**
**Tokyo 100-8071 (JP)**

(72) Inventors:
• **SENDAI, Yusuke**
**Tokyo 100-8071 (JP)**
• **OE, Taro**
**Tokyo 100-8071 (JP)**

• **KAMITANI, Hiroki**
**Tokyo 100-8071 (JP)**

(74) Representative: **Zimmermann & Partner**
**Patentanwälte mbB**
**Postfach 330 920**
**80069 München (DE)**

(56) References cited:
| | |
|---|---|
| **EP-A1- 2 078 764** | **EP-A1- 2 128 278** |
| **EP-A1- 2 789 700** | **WO-A1-93/16823** |
| **JP-A- H0 790 375** | **JP-A- H0 892 649** |
| **JP-A- H04 154 913** | **JP-A- S61 266 126** |
| **JP-A- S62 151 545** | **JP-A- 2003 277 831** |
| **JP-A- 2003 277 831** | |

**(Cont. next page)**

(52) Cooperative Patent Classification (CPC): (Cont.)
C22C 38/06; C22C 38/08; C22C 38/18;
C22C 38/20; C22C 38/22; C22C 38/24;
C22C 38/26; C22C 38/58; Y02P 10/25

**Description**

TECHNICAL FIELD

The present invention relates to a steel bend pipe and a method for producing the steel bend pipe.

BACKGROUND ART

Steel products used for pipelines for transporting oil or natural gas are required to have corrosion resistance appropriate for a use environment, in particular, resistance to hydrogen induced cracking (HIC) (hereafter, referred to as HIC resistance), and is further required to have a thick wall (a wall thickness of 30 mm or larger) and high strength (X65 Grade defined in API 5L/ISO 3183: YS450 to 600 MPa). In addition to straight pipes, pipes having curved sections (bend pipes) are also used for the pipelines depending on the geography of the land where the pipes are laid. In a subsea completion well, which includes well-head equipment placed on the sea bottom, a flowline to be connected to an offshore platform needs to be connected with subsea equipment, and a bend pipe is used in a connecting portion between the flowline and the subsea equipment, and the like. Bend pipes are required to have the same mechanical properties as that of straight pipes, and thus a portion of a straight pipe is subjected to bending work performed as hot processing, and then the pipe is subjected to quenching and tempering.

Patent Document 1 discloses a steel bend pipe that is a welded steel pipe having a predetermined chemical composition subjected to bending work performed as hot processing, then cooled down to a temperature range of 300°C or less at a cooling rate of 5°C/s or more at its center portion in a wall-thickness direction in a temperature range of 700 to 500°C, and then tempered in a temperature range of 300°C or more to 500°C or less.

Patent Document 2 discloses a steel bend pipe that is a welded steel pipe having a predetermined chemical composition subjected to bending work performed as hot processing, then cooled down to a temperature range of 300°C or less at a cooling rate of 3°C/s or more, and then tempered in a temperature range of 300 to 500°C.

Patent Document 3 discloses seamless bend pipe that includes a bent portion and straight pipe portions at opposite ends of the bent portion. Inner diameters of both pipe ends are larger than that of the bent portion.

Patent Document 4 discloses a steel bend pipe obtained from a straight pipe having a predetermined chemical composition by subjecting the pipe to heating to a temperature range of an $Ac_3$ point or more to 1050°C or less, then to bending work, immediately thereafter to quenching, and then to tempering in a temperature range of 250 to 500°C.

Patent Document 5 discloses a steel bend pipe obtained from a straight pipe having a predetermined chemical composition by subjecting the pipe to heating to a temperature of an $Ac_3$ point or more to $Ac_3$ point + 100°C or less, then to bending work, immediately thereafter to air cooling from 800°C to 500°C at a cooling rate of 0.5°C/s or more, and thereafter, to tempering at a temperature of 650°C or less.

Patent Document 6 discloses a steel bend pipe obtained from a straight pipe having a predetermined chemical composition by subjecting the pipe to quenching in which the pipe is bent after heated to a temperature range of 900 to 1050°C and thereafter subjected to rapid cooling, and then to tempering in a temperature range of 450 to 600°C.

Patent Document 7 discloses that, in a base material containing, by mass, 0.02 to 0.10% C, <=0.5% Si, 0.5 to 2.0% Mn, <=0.02% P, <=0.02% S,<=0.05% Nb, <=0.1% Al, <=0.4% Ni, <=0.010% N, <=0.0035% O, <=0.05% Ti and/or 0.5% Mo, and the balance iron, the inside and outside faces are subjected to one pass submerged arc welding by low O flux and a low CTi-B welding wire and is thereafter subjected to bending and heat treatment. In this method, the weld metal has a composition containing 0.02 to 0.10% C, <=0.6% Si, <=1.60% Mn, <=0.02% P, <=0.02% S, <=0.05% Nb, <=0.02% Al, <=0.4% Ni, <=0.010% N and <=0.035% O, and the balance iron and is welded to 0.07 to 0.21 Pcm. Next, it is heated to the Ac3 to 1100°C, is subjected to bending and is thereafter subjected to forced cooling to <=300°C at a cooling rate of <=5°C/sec, and the whole body of the tube is heated to 400 to 500°C for >=10 min and is cooled at >=0.03°C/sec.

Patent Document 8 discloses a method of manufacturing a bent pipe, in which a straight pipe of high tensile steel consisting of low alloy steel containing 0.08 percent weight of C or lower or a straight clad pipe composed of said low alloy steel at the outer part and high anti-corrosive alloy at the inner part is heated to a temperature not lower than Ac3 point of the low alloy steel, bent at said temperature, hardened starting at the above temperature immediately after bent, and tempered at a temperature ranging from 250 to 500°C, thereby being turned into a final product.

LIST OF PRIOR ART DOCUMENTS

PATENT DOCUMENT

Patent Document 1: WO 2008/139639
Patent Document 2: WO 2008/007737
Patent Document 3: JP2008-249010A
Patent Document 4: JP7-3330A
Patent Document 5: JP6-330169A
Patent Document 6: JP4-154913A
Patent Document 7: JP H08 92649 A
Patent Document 8: WO 93/16823 A

SUMMARY OF INVENTION

TECHNICAL PROBLEM

Steel for line pipes is required to have excellent weldabilities. Therefore, components of the steel for line pipes are designed to have a low carbon equivalent as compared with steel for oil country tubular goods (OCTG), which are installed without being welded, and thus the steel for line pipes has a low hardenability. As a result, when the steel for line pipes is subjected to quenching and tempering, which are typical heat treatment, a surface portion may have a high hardness because a cooling rate is high during the quenching, and a mid-wall portion may have a low hardness because a cooling rate is low, and a hardness distribution assumes a U-shape in a wall-thickness direction. This hardness distribution remains even after the tempering.

Line pipes for sour service need to be controlled to have low hardness so as to provide excellent HIC resistance, but the above-mentioned hardness distribution is a problem of production. In addition, bend pipes to be welded to line pipes, subsea equipment or the like are made with similar component designs, and therefore have similar hardness distributions, to straight pipes. In particular, the bend pipes have complex shapes, and a cooling rate thereof in quenching is lower as compared with the straight pipes. The tendency is noticeable in thick-wall bend pipes having wall thicknesses of 30 mm or more, and therefore it is highly difficult to ensure high strength of X65 Grade (YS: 450 to 600 MPa) and hardness as low as 230 or less in terms of Vickers hardness (HV10).

In the inventions of Patent document 1 and Patent Document 2, a temperature of heat treatment (tempering) after cooling is 300 to 500°C, which is too low. Patent Document 3 does not disclose a temperature of the bending work, a cooling rate, and a temperature of heat treatment after cooling. In the inventions of Patent document 4 to Patent Document 6, a temperature of heating before the bending work is too low. In particular, in contrast to bend pipes having wall thicknesses of less than 30 mm described in examples of these Documents, it is difficult in the thick-wall bend pipes having wall thicknesses of 30 mm or more to ensure sufficiently high cooling rates. Therefore, conventional techniques have not succeeded in obtaining a steel bend pipe having a sufficient strength and corrosion resistance at a bent portion.

An objective of the present invention is to provide a steel bend pipe that is excellent in strength of its bent portion and excellent in HIC resistance.

SOLUTION TO PROBLEM

To solve the problem described above, the present inventors conducted intensive studies and consequently obtained the following findings.

(1) When a heating temperature of bending work is less than 1050°C, a hardness of a wall-thickness center portion in a bent portion of a resultant steel bend pipe decreases, and it is difficult to recover this decrease in hardness of the wall thickness center portion even with subsequent quenching. As a result, a yield stress of the bent portion decreases. If such a steel bend pipe is subjected to heat treatment at a relatively high temperature, a hardness of a surface can be decreased, but a hardness of a wall-thickness center portion cannot be increased. Consequently, a high strength product of X65 Grade (YS: 450 to 600 MPa) cannot be obtained. Therefore, it is important to set the heating temperature of the bending work is set at more than 1050°C, particularly 1060°C or more.

(2) Performing the bending work at a relatively high temperature as described above can increase the hardness of the wall thickness center portion in the bent portion, whereas a hardness of an outer layer is excessively increased.

For that reason, even when heat treatment at 500°C or less is performed on the steel bend pipe subjected to such bending work, it is difficult to decrease the hardness of the outer layer sufficiently. In particular, a hardness of an outer region (dorsal side) of the bent portion in the steel bend pipe (a region to which a tensile load is applied in the bending work) is increased, failing to provide a desired HIC resistance. Therefore, it is important to set the temperature of the heat treatment after the cooling at more than 500°C, particularly 510°C or more.

The present invention has been made based on such findings and has a gist of the following steel bend pipe and method for producing the steel bend pipe.

The present invention is as described in the appended claims.

ADVANTAGEOUS EFFECTS OF INVENTION

According to the present invention, it is possible to provide a steel bend pipe having a high strength of X65 Grade (YS: 450 to 600 MPa) and excellent HIC resistance.

BRIEF DESCRIPTION OF DRAWINGS

[Figure 1] Figure 1 is a schematic diagram illustrating an example of a steel bend pipe according to the present embodiment.
[Figure 2] Figure 2 is a cross sectional view taken along a line a-a in Figure 1.

DESCRIPTION OF INVENTION

A steel bend pipe according to the present invention will be described below with reference to the drawings.
1. Steel Bend Pipe

(1) Shape

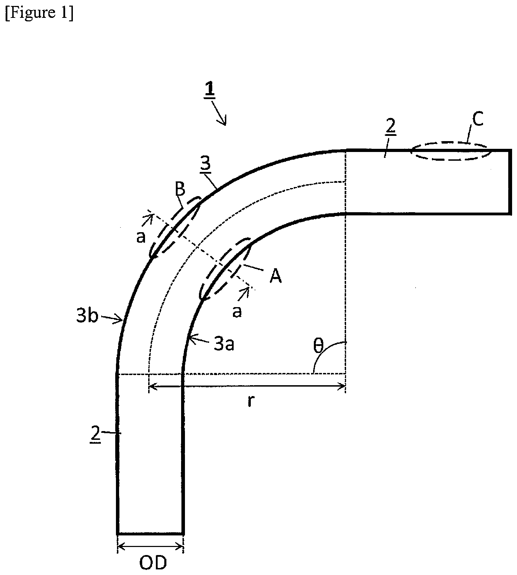

As illustrated in Figure 1, a steel bend pipe 1 according to the present invention includes straight pipe portions 2 and a bent portion 3. A bending radius r (mm) of the bent portion 3 is not less than three times an outer diameter OD (mm) of the straight pipe portions 2, that is, not less than 3OD. If the bending radius r (mm) of the bent portion 3 is smaller than 3OD, a difference in wall thickness becomes too large between an inner portion (ventral-side portion) 3a and an outer portion (dorsal-side portion) 3b, of the bent portion, which makes an unevenness in mechanical property too large. An upper limit of the bending radius r is not particularly limited, but a large bending radius requires a large work space for bending work, and thus the upper limit of the bending radius is preferably 20OD under a constraint of facility. A bending angle θ may be designed according to an actual condition of use, and is practically 180° or less. In the present embodiment, the bending radius r means a bending radius corresponding to a line passing a center of the steel bend pipe 1 (center line).

The steel bend pipe 1 according to the present embodiment has a wall thickness of, for example, 30 to 50 mm. An effect of the present invention is remarkable in thick-wall steel bend pipes having wall thicknesses of not less than 30 mm, and the present invention can be suitably used in thick-wall steel bend pipes having wall thicknesses of not less than 35 mm.

The steel bend pipe according to the present invention may be a welded steel pipe obtained by bending a steel plate and welding abutting portions, or may be a seamless steel pipe produced by using a piercing-rolling mill or the like. Since the steel bend pipe according to the present invention has a high strength of X65 Grade (YS: 450 to 600 MPa) and excellent HIC resistance, the steel bend pipe is particularly most suitable for pipelines, flowlines, and the like. From this viewpoint, the steel bend pipe according to the present invention is preferably a steel bend pipe obtained by performing bending work on a seamless steel pipe.

(2) Chemical Composition

The steel bend pipe according to the present invention has the following chemical composition. In the following description, the symbol "%" for contents means "percent by mass".

C: 0.04 to 0.08%

C (carbon) is an element that is effective to increase strength. To have a strength of X65 Grade or greater, a content of C is set at 0.04% or more. Meanwhile, an excessive content of C leads to a significant decrease in toughness, which adversely affects a mechanical property of a base metal and increases occurrence of a surface defect on a slab. Consequently, the content of C is set at 0.08% or less. An upper limit of the content of C is desirably 0.07%, and a lower limit of the content of C is desirably 0.05%.

Si: 0.05 to 0.50%

Si (silicon) is an element that is used as a deoxidizer for steel and also an element that is effective to strengthen steel, and therefore a content of Si is set at 0.05% or more. Meanwhile, an excessive content of Si leads to a significant decrease in toughness, resulting in a decrease of a mechanical property of the steel bend pipe. Consequently, the content of Si is set at 0.50% or less. An upper limit of the content of Si is desirably 0.30%, and a lower limit of the content of Si is desirably 0.10%.

Mn: 1.00 to 1.70%

Mn is effective to increase strength and toughness of steel, and a content of Mn is set at 1.00% or more. Meanwhile, an excessive content of Mn results in a decrease in toughness, and therefore the content of Mn is set at 1.70% or less. An upper limit of the content of Mn is desirably 1.60%, and a lower limit of the content of Mn is desirably 1.20%.

P: 0.015% or less

P (phosphorus) is unavoidably present in steel, an excessive content of P degrades corrosion resistance, and therefore a content of P is set at 0.015% or less. An upper limit of the content of P is desirably set at 0.013%.

S: 0.002% or less

S (sulfur) is unavoidably present in steel, an excessive content of S degrades a toughness of a base metal, and therefore a content of S is set at 0.002% or less.
    Cu: 0 to 0.50%
    Ni: 0 to 0.50%
    Cr: 0 to 0.50%

Cu, Ni, and Cr are elements that all contribute to enhancement of solid-solution strengthening and hardenability, enables strength to be strengthened without significantly lose toughness, and therefore may be contained in the steel bend pipe. However, a content of Cu more than 0.50% causes Cu checking to occur, which causes a surface defect of a slab. A content of Ni more than 0.50% results in a significant increase in cost. A content of Cr more than 0.50% results in a decrease of toughness. Consequently, for each element of Cu, Ni, and Cr, a content thereof is set at 0.50% or less. To obtain the above effect, each element of Cu, Ni, and Cr is preferably contained at 0.05% or more. An upper limit of the content of Cu is desirably 0.30%, and a lower limit of the content of Cu is desirably 0.05%. An upper limit of the content of Ni is desirably 0.40%, and a lower limit of the content of Ni is desirably 0.05%. An upper limit of the content of Cr is desirably 0.40%, and a lower limit of the content of Cr is desirably 0.05%.

Mo: 0 to 0.50%

Mo (molybdenum) has an effect of minimizing a degradation in toughness and an effect of increasing strength, and may be contained in the steel bend pipe. However, a content of Mo more than 0.50% results in a degradation in peripheral weldability in laying the steel bend pipe, and therefore a content of Mo is set at 0.50% or less. An upper limit of the content of Mo is desirably 0.30%, and a lower limit of the content of Mo is desirably 0.05%.

Sol.Al: 0 to 0.10%

Aluminum (Al) combines with N to form its fine nitride, increasing a toughness of steel, and thus aluminum may be contained in steel. A trace amount of Al can provide the above effect. Meanwhile, an excessive content of Al causes Al nitride to coarsen, resulting in a decrease in toughness of steel. Therefore, when Al is contained, a content of Al, in a form of Sol.Al (acid-soluble Al), is set at 0.10% or less. A lower limit of the content of Al is preferably 0.001%, more preferably 0.01%. An upper limit of the content of Al is preferably 0.08%, more preferably 0.06%.

Ca: 0 to 0.0050%

Ca is effective to spheroidizing inclusions and is an element that is effective to prevent hydrogen induced cracking and lamellar tearing, and may be contained in the steel bend pipe. However, a content of Ca more than 0.0050% saturates these effects, and therefore a content of Ca is set at 0.0050% or less. An upper limit of the content of Ca is desirably 0.0020%, and a lower limit of the content of Ca is desirably 0.0001%.
Nb: 0 to 0.050%
V: 0 to 0.10%
Ti: 0 to 0.030%

Nb, V, and Ti are elements that all contribute to enhancement of precipitation strengthening and hardenability as well as elements that refine grains to improve toughness, and thus may be contained in the steel bend pipe. However, excessively contents of these elements result in a decrease in toughness of weld metal in a weld portion. Thus, a content of Nb is set at 0.050% or less, a content of V is set at 0.10% or less, and a content of Ti is set at 0.030% or less. An upper limit of the content of Nb is desirably 0.020%, and a lower limit of the content of Nb is desirably 0.001%. An upper limit of the content of V is desirably 0.07%, and a lower limit of the content of V is desirably 0.01%. An upper limit of the content of Ti is desirably 0.010%, and a lower limit of the content of Ti is desirably 0.005%.
The steel bend pipe according to the present invention contains the above elements within respective defined ranges and makes Ceq (carbon equivalent) calculated from the following Formula (1) 0.35% or more:

$$Ceq = C + Mn/6 + (Cr + Mo + V) / 5 + (Cu + Ni) / 15 \ ... \ (1)$$

The symbols of elements in the above Formula (1) mean contents of the respective elements (in mass percent). Ceq is an index for evaluation of hardenability of a steel product. To obtain high strength even in a case of a thick-wall steel pipe having a wall thickness of 30 mm or more, Ceq is set at 0.35% or more.
The balance of the chemical composition of the steel bend pipe according to the present invention is Fe and impurities. The "impurities" herein means components that are mixed in producing the steel product industrially, from materials such as ores and scraps or owing to other factors.

(3) Properties

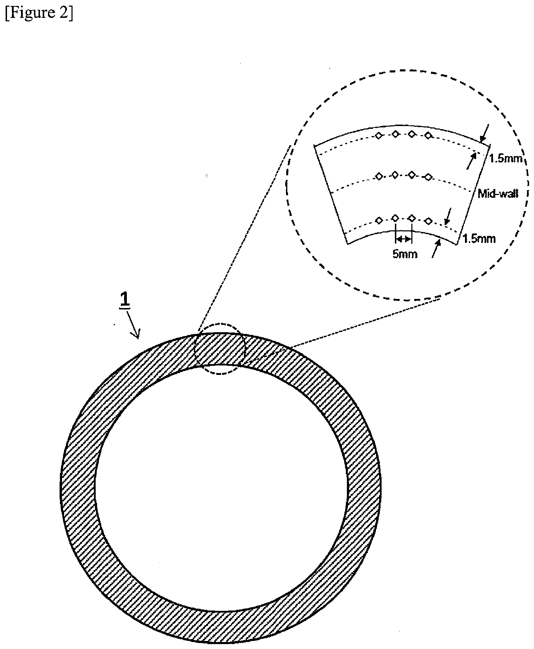

The steel bend pipe according to the present invention needs to have a high strength of X65 Grade (YS: 450 to 600 MPa) conforming to API 5L/ISO 3183 and a low hardness of 230 or less in terms of Vickers hardness (HV10) with a test force of 10 kgf conforming to ASTM E92 (2016). The strength and the hardness need to be excellent in both of the straight pipes 2 and the bent portion 3.
Here, as illustrated in Figure 1, various tests are conducted using specimens taken from an area A in the inner portion 3a of the bent portion 3, an area B in the outer portion 3b, and an area C in a straight pipe portion 2 sufficiently far from the bent portion 3. In the present embodiment, the area A is provided in a center portion of the inner portion 3a, the area B is provided in a center portion of the outer portion 3b, and the area C is provided at a position in the straight pipe portion 2 that is far from the bent portion 3 by, for example, 50 mm or more. For a tension test, a round bar specimen conforming to ASTM A370 is taken. Figure 2 is a cross sectional view taken along a line a-a in Figure 1. As illustrated in Figure 2, for specimens taken from the above three areas, Vickers hardnesses are measured at 12 spots in total including four spots (with 5 mm pitches) at 1.5 mm positions from an outer surface of the steel bend pipe 1 (outer surface proximity position), four spots (with 5 mm pitches) at wall-thickness center positions of the steel bend pipe 1, and four spots (with 5 mm pitches) at 1.5 mm positions from an inner surface of the steel bend pipe 1 (inner surface proximity position).
For evaluation of strength of the steel bend pipe, such a criterion is set that yield stresses in the area A to the area C (in particular, the area A and the area B) all fall within a range of 450 to 600 MPa. For evaluation of hardness of the steel bend pipe, such a criterion is set that maximum Vickers hardnesses (HV10) are 230 or less at all of outer surface proximity positions, wall-thickness center positions, and inner surface proximity positions in the area A to the area C (in particular, the area A and the area B). In particular, it is preferable that, in each area, differences in Vickers hardness between the outer surface proximity position and the wall-thickness center position (the differences at four measurement positions in a circumferential direction) and differences in Vickers hardness between the inner surface proximity position and the wall-thickness center position (the differences at four measurement positions in the circumferential direction) are 30 or less, that is, the following Formula (2) and Formula (3) are satisfied:

$$\mathrm{Hv}_{10I} - \mathrm{Hv}_{10M} \leq 30 \ ... \ (2)$$

$$\mathrm{Hv}_{10O} - \mathrm{Hv}_{10M} \leq 30 \ ... \ (3)$$

Here, meaning of each symbol in the above Formula (2) and Formula (3) is as follows.

$H_{V10I}$: Vickers hardness (HV10) at a 1.5 mm depth position from an inner surface of the bent portion.

$H_{V10M}$: Vickers hardness (HV10) at a wall-thickness center position of the bent portion $H_{V10O}$: Vickers hardness (HV10) at a 1.5 mm depth position from an outer surface of the bent portion.

(4) Metal Micro-structure

The steel bend pipe according to the present embodiment has, for example, a metal micro-structure mainly including bainite. The metal micro-structure mainly including bainite means a metal micro-structure in which an abundance of bainite is 90% by volume or more. The rest of the metal micro-structure has no limitation and may include, for example, less than 10% by volume of martensite or the like.

2. Method for Producing Steel Bend Pipe

(a) Producing Straight Pipe

In a method for producing the steel bend pipe according to the present invention, a straight pipe may be produced by a known method. A seamless steel pipe may be produced by the Mannesmann process, that is, by performing piercing-rolling on a billet of which a chemical composition is adjusted to a predetermined chemical composition, or a welded steel pipe such as an electric resistance welded steel pipe, a spiral steel pipe, and a UO steel pipe may be produced from a steel plate of which a chemical composition is adjusted to a predetermined chemical composition.

(b) Bending Work

In the method for producing the steel bend pipe according to the present invention, a steel pipe (straight pipe) having a thickness of 30 mm or more (preferably 50 mm or less) and having a predetermined chemical composition is first quickly heated to a predetermined heating temperature, and immediately thereafter subjected to bending work. The heating temperature is more than 1050°C to 1100°C or less. Here, the heating temperature refers to a temperature at an outer surface of the steel pipe. The heating temperature can be measured by, for example, a radiation thermometer. When the heating temperature of the bending work is 1050°C or less, hardness of a wall-thickness center portion in a bent portion 3 of a resultant steel bend pipe 1 decreases, and it is difficult to recover this decrease in hardness even with subsequent quenching. As a result, a yield stress of the bent portion 3 decreases. If such a steel bend pipe 1 is subjected to heat treatment at a relatively high temperature, a hardness of a surface can be decreased, but a hardness of a wall-thickness center portion cannot be increased. Consequently, a high strength product of X65 Grade (YS: 450 to 600 MPa) cannot be obtained. Therefore, the heating temperature of the bending work is set at more than 1050°C, preferably 1060°C or more. Meanwhile, an excessively high heating temperature of the bending work causes a problem of deteriorating toughness. Therefore, the heating temperature of the bending work is set at 1100°C or less, preferably 1090°C or less. In the present embodiment, being immediately thereafter subjected to the bending work refers to being subjected to bending work, for example, after the heating and before a temperature of the steel pipe drops to 1050°C or less. It is preferable for the bending work to be performed after the heating and before the temperature of the steel pipe drops to less than 1060°C.

As a method for the heating, for example, a high-frequency induction heating method is used. In the high-frequency induction heating method, the steel pipe can be rapidly, locally heated (e.g., at 10 to 30°C/s, as an average heating rate, from a room temperature (20°C) to the heating temperature described above). In addition, in the high-frequency induction heating method, a steel pipe is heated and subjected to the bending work while being fed from a high-frequency heating coil to a bending work apparatus, so that the bending work can be immediately performed on a predetermined region having been heated. It is considered that, for example, performing the rapid heating at high temperature in such a manner makes particle size smaller after the quenching, which leads to improvement of toughness and HIC resistance.

Usually, in production of the steel bend pipe 1, only a portion of a prepared straight pipe to become a bent portion 3 is typically heated. However, when the steel pipe is finished into the steel bend pipe 1, the bent portion 3 has been heated while straight pipe portions 2 have not been heated, the steel bend pipe becomes uneven in thermal hysteresis as a whole, and as a result, unevenness in mechanical property and HIC resistance may develop. Hence, in the present invention, it is preferable that the heating for the bending work is performed on an overall length of the steel pipe, including portions where the bending work is not performed.

The heated steel pipe (straight pipe) is bent such that a bending radius r (mm) of the bent portion 3 is not less than three times the outer diameter OD (mm) of the straight pipe portions 2, that is, not less than 3OD, so as to be formed into the steel bend pipe 1. If the bending radius r (mm) of the bent portion 3 is smaller than 3OD, a difference in wall thickness becomes too large between the inner portion 3a and the outer portion 3b, of the bent portion, which makes the unevenness in mechanical property too large. An upper limit of the bending radius r is not particularly limited, but a large bending radius requires a large work space for bending work, and thus the upper limit of the bending radius is preferably 20OD under constraint of facility. The bending angle θ may be designed according to an actual condition of use, and is practically 180° or less.

(c) Cooling

After the bending work, the steel bend pipe 1 is cooled at an average cooling rate of 3°C/s or more in a temperature range of 800 to 500°C. If the average cooling rate of the steel bend pipe 1 in the above temperature range is less than 3°C/s, there is a problem in that the quenching is not performed sufficiently, failing to ensure the strength. A lower limit of the average cooling rate is preferably 5°C/s. Such a cooling rate can be provided by, for example, performing water cooling rapidly on the steel pipe subjected to the bending work. A time from finishing the bending work to starting the cooling is preferably shortened as much as possible so that the temperature of the steel bend pipe 1 does not drop.

(d) Heat Treatment (Tempering)

After the cooling, heat treatment (tempering) is performed in a temperature range of more than 500°C to 600°C or less. The method for producing the steel bend pipe according to the present embodiment includes performing the bending work at a temperature as relatively high as more than 1050°C in the above manner so as to increase a hardness at the wall-thickness center portion of the bent portion, but accordingly, a hardness of a surface layer is excessively increased. For that reason, even when heat treatment at 500°C or less is performed on the steel bend pipe subjected to such bending work, it is difficult to decrease the hardness of the surface layer sufficiently, and in particular, a hardness of the outer portion 3b of the bent portion in the steel bend pipe (a region to which a tensile load is applied in the bending work) is increased, failing to provide a desired HIC resistance. Therefore, a temperature of the heat treatment after the cooling is set at more than 500°C, in particular, it is preferable to set the temperature at 510°C or more. In contrast, an excessively high temperature of the heat treatment results in a decrease in strength. Therefore, the temperature of the heat treatment is set at 600°C or less, preferably 580°C or less. The soaking duration in the heat treatment is 70 minutes or more, and is preferably up to 130 minutes, to decrease the hardness of the wall thickness center portion. Although there is no limitation on a condition for cooling after the heat treatment is finished, air cooling is preferably performed.

EXAMPLE 1

To explain an effect of the present invention, steels having chemical compositions shown in Table 1 were melted, and steel pipes (straight pipes) having various dimensions were produced by the Mannesmann pipe making process.

Subsequently, the bending work was performed using a hot bending work apparatus that includes a high-frequency heating coil, bending work machine, and a cooling spray, in this order. In other words, being fed, the above steel pipes were heated to various temperatures for overall lengths of the steel pipes by a high-frequency induction heating coil (average temperature rise rate: 10 to 30°C/s), immediately thereafter subjected to the bending work at a predetermined portion of the heated steel pipes, and immediately after the bending work, sprayed with cooling water from a cooling spray, so as to be cooled to 500°C or less. At this point, the average cooling rate in the temperature range of 800 to 500°C was 5°C/s or more. Thereafter, heat treatment including performing the heating in various conditions (temperatures, soaking durations) and performing the air cooling was performed, and steel bend pipes were obtained. Producing conditions are shown in Table 2. In each of the resultant steel bend pipes, various specimens were taken from the area A (the inner portion 3a of the bent portion), the area B (the outer portion 3b of the bent portion), and the area C (a straight pipe portion) illustrated in Figure 1, and a HIC resistance test, a tension test, and a hardness test were conducted by the following method. Results of the tests are shown in Table 2 altogether.

<HIC Resistance Test>

According to NACE TM 0284, the specimens were immersed in Solution A for 96 hrs, and Table 2 shows those without occurrence of a crack as "○" and those with occurrence of a crack as "×".

<Tension Test>

Round bar specimens conforming to ASTM A370 were taken from the areas, subjected to the tension test, and their yield stresses (YS) and tensile strengths (TS) were measured.

According to ASTM E92(2016), the test was conducted with a test force of 10 kgf, and their Vickers hardnesses (HV10) were measured. Pressing points were set at 12 spots in total including, as illustrated in Figure 2, four spots (with 5 mm pitches) at 1.5 mm positions from an outer surface of each steel pipe (outer surface proximity position), four spots (with 5 mm pitches) at wall-thickness center positions of each steel pipe, and four spots (with 5 mm pitches) at 1.5 mm positions from an inner surface of each steel pipe (inner surface proximity position). Table 2 shows maximum values at the respective measurement spots with the 1.5 mm positions from the outer surface of each steel pipe abbreviated to "OUTER SURFACE", the wall-thickness center positions abbreviated to "MID-WALL", and 1.5 mm positions from the inner surface of each steel pipe abbreviated to "INNER SURFACE".

[Table 1]

[Table 1]

Table 1

| CATEGORY | | CHEMICAL COMPOSITION (mass%, BALANCE: Fe AND IMPURITIES) | | | | | | | | | | | | | |
|---|---|---|---|---|---|---|---|---|---|---|---|---|---|---|---|
| | | C | Si | Mn | P | S | Cu | Ni | Cr | Mo | sol.Al | Ca | V | Ti | Ceq |
| INVENTIVE EXAMPLE | 1 | 0.06 | 0.14 | 1.50 | 0.012 | 0.0010 | 0.21 | 0.28 | 0.30 | 0.18 | 0.036 | 0.001 | 0.05 | 0.004 | 0.45 |
| | 2 | 0.06 | 0.17 | 1.55 | 0.010 | 0.0015 | 0.20 | 0.30 | 0.28 | 0.22 | 0.044 | 0.001 | 0.06 | 0.008 | 0.46 |
| | 3 | 0.06 | 0.11 | 1.54 | 0.007 | 0.0020 | 0.21 | 0.22 | 0.28 | 0.08 | 0.028 | 0.001 | 0.05 | 0.003 | 0.43 |
| | 4 | 0.06 | 0.14 | 1.44 | 0.014 | 0.0016 | 0.05 | 0.05 | 0.21 | 0.07 | 0.035 | 0.001 | 0.05 | 0.006 | 0.37 |
| | 5 | 0.07 | 0.12 | 1.29 | 0.012 | 0.0014 | - | - | 0.26 | 0.20 | 0.032 | 0.002 | 0.05 | 0.008 | 0.38 |
| COMPARATIVE EXAMPLE | 1 | 0.07 | 0.19 | 1.25 | 0.008 | 0.0012 | - | - | 0.18 | - | 0.035 | 0.001 | 0.04 | 0.004 | 0.33 |
| | 2 | 0.06 | 0.16 | 1.47 | 0.010 | 0.0014 | 0.08 | 0.07 | 0.27 | 0.05 | 0.024 | 0.002 | 0.05 | 0.007 | 0.39 |
| | 3 | 0.06 | 0.28 | 1.45 | 0.008 | 0.0015 | 0.02 | 0.19 | 0.27 | 0.21 | 0.034 | 0.002 | 0.05 | 0.006 | 0.42 |
| | 4 | 0.06 | 0.12 | 1.34 | 0.012 | 0.0016 | 0.02 | 0.03 | 0.26 | 0.21 | 0.038 | 0.002 | 0.05 | 0.007 | 0.39 |
| | 5 | 0.06 | 0.28 | 1.45 | 0.008 | 0.0015 | 0.02 | 0.19 | 0.27 | 0.21 | 0.034 | 0.002 | 0.05 | 0.006 | 0.42 |

[Table 2]

Table 2

| CATEGORY | | OUTER DIAMETER (mm) | WALL THICKNESS (mm) | BENDING RADIUS | HEATING TEMPERATURE (°C) | COOLING RATE (°C/sec) | SOAKING TEMPERATURE (°C) | SOAKING DURATION (min) | REGION WHERE SPECIMEN IS TAKEN | Ceq. | S | HIC | YS (MPa) | TS (MPa) | OUTER SURFACE | MID-WALL | INNER SURFACE |
|---|---|---|---|---|---|---|---|---|---|---|---|---|---|---|---|---|---|
| INVENTIVE EXAMPLE | 1 | 273.05 | 48.26 | 5DR | 1090 | 5 | 550 | 120 | AREA A | 0.45 | 0.0010 | O | 506 | 613 | 206 | 209 | 212 |
| | | | | | | | | | AREA B | | | O | 507 | 612 | 207 | 201 | 207 |
| | | | | | | | | | AREA C | | | O | 515 | 620 | 210 | 201 | 199 |
| | 2 | 219.08 | 35.40 | 5DR | 1090 | 6 | 550 | 90 | AREA A | 0.46 | 0.0015 | O | 566 | 658 | 228 | 221 | 225 |
| | | | | | | | | | AREA B | | | O | 564 | 658 | 229 | 220 | 221 |
| | | | | | | | | | AREA C | | | O | 571 | 660 | 227 | 219 | 224 |
| | 3 | 298.5 | 39.00 | 5DR | 1090 | 6 | 550 | 105 | AREA A | 0.42 | 0.0010 | O | 509 | 610 | 214 | 195 | 196 |
| | | | | | | | | | AREA B | | | O | 505 | 606 | 205 | 198 | 203 |
| | | | | | | | | | AREA C | | | O | 493 | 597 | 193 | 199 | 201 |
| | 4 | 323.9 | 31.00 | 3DR | 1070 | 8 | 550 | 80 | AREA A | 0.37 | 0.0012 | O | 456 | 552 | 199 | 193 | 191 |
| | | | | | | | | | AREA B | | | O | 451 | 541 | 195 | 182 | 188 |
| | | | | | | | | | AREA C | | | O | 452 | 547 | 191 | 183 | 182 |
| | 5 | 323.9 | 32.50 | 5DR | 1090 | 8 | 550 | 85 | AREA A | 0.38 | 0.0014 | O | 458 | 562 | 193 | 181 | 203 |
| | | | | | | | | | AREA B | | | O | 482 | 590 | 203 | 185 | 203 |
| | | | | | | | | | AREA C | | | O | 464 | 577 | 196 | 184 | 203 |
| COMPARATIVE EXAMPLE | 1 | 406.4 | 12.70 | 3DR | 980 | 15 | - | | AREA A | 0.33 | 0.0017 | × | 510 | 643 | 245 | 209 | 223 |
| | | | | | | | | | AREA B | | | × | 490 | 615 | 237 | 197 | 214 |
| | | | | | | | | | AREA C | | | × | 501 | 624 | 241 | 201 | 215 |
| | 2 | 323.9 | 31.10 | 5DR | 1090 | 8 | - | | AREA A | 0.39 | 0.0010 | × | 486 | 640 | 242 | 205 | 257 |
| | | | | | | | | | AREA B | | | × | 454 | 614 | 234 | 194 | 245 |
| | | | | | | | | | AREA C | | | × | 467 | 620 | 239 | 200 | 251 |
| | 3 | 273.1 | 32.00 | 5DR | 1090 | 8 | 450 | 80 | AREA A | 0.42 | 0.0020 | × | 559 | 649 | 259 | 203 | 202 |
| | | | | | | | | | AREA B | | | × | 526 | 614 | 241 | 192 | 193 |
| | | | | | | | | | AREA C | | | × | 541 | 634 | 248 | 197 | 199 |
| | 4 | 355.6 | 31.50 | 5DR | 1070 | 8 | 480 | 80 | AREA A | 0.42 | 0.0016 | × | 543 | 662 | 252 | 208 | 226 |
| | | | | | | | | | AREA B | | | × | 514 | 624 | 238 | 194 | 204 |
| | | | | | | | | | AREA C | | | × | 524 | 641 | 242 | 201 | 211 |
| | 5 | 273.1 | 30.50 | 5DR | 950 | 8 | 550 | 80 | AREA A | 0.39 | 0.0016 | O | 426 | 558 | 199 | 176 | 188 |
| | | | | | | | | | AREA B | | | O | 415 | 521 | 181 | 167 | 175 |
| | | | | | | | | | AREA C | | | O | 420 | 537 | 190 | 170 | 180 |

As shown in Table 2, inventive examples 1 to 5, which were heated and subjected to the bending work at a sufficiently high temperature and subjected to the heat treatment at a sufficiently high temperature provided excellent HIC resistance and high strength. In particular, from the results about the inventive examples 1 to 3, it was found that a sufficient effect can be obtained even in a case where the wall thickness was 35 mm or more. In contrast, comparative examples 1 to 5, for which one of the temperature of the heating for the bending work and the temperature of the heat treatment was low, showed a poor performance in one of the HIC resistance and the strength.

INDUSTRIAL APPLICABILITY

According to the present invention, it is possible to provide a steel bend pipe having a high strength of X65 Grade (YS: 450 to 600 MPa) and an excellent HIC resistance.

REFERENCE SIGNS LIST

1 Steel bend pipe
2 Straight pipe portion
3 Bent portion
3a Inner portion of bent portion
3b Outer portion of bent portion
θ Bending angle
r Bending radius of bent portion
OD Outer diameter of straight pipe portion

Claims

1. A steel bend pipe that includes a straight pipe portion and a bent portion having a bending radius not less than three times an outer diameter of the straight pipe portion and has a wall thickness of 30 mm or more, the steel bend pipe having a chemical composition comprising, in mass percent:

C: 0.04 to 0.08%;
Si: 0.05 to 0.50%;
Mn: 1.00 to 1.70%;
P: 0.015% or less;
S: 0.002% or less;
Cu: 0 to 0.50%;
Ni: 0 to 0.50%;
Cr: 0 to 0.50%;
Mo: 0 to 0.50%;
Sol.Al: 0 to 0.10%;
Ca: 0 to 0.0050%;
Nb: 0 to 0.050%;
V: 0 to 0.10%;
Ti: 0 to 0.030%, and
the balance: Fe and impurities,

wherein Ceq calculated from following Formula (1) is 0.35% or more, and in the straight pipe portion and the bent portion, a yield stress is 450 to 600MPa, and a Vickers hardness HV10, is 230 or less:

$$Ceq = C + Mn/6 + (Cr + Mo + V) / 5 + (Cu + Ni) / 15 \ ... \ (1)$$

where symbols of elements in Formula (1) above mean contents of respective elements (in mass percent), and
the Vickers hardness HV10 is measured as described in the description.

2. The steel bend pipe according to claim 1, wherein the chemical composition contains one or more selected from:

Cu: 0.05 to 0.50%;
Ni: 0.05 to 0.50%;
Cr: 0.05 to 0.50%;
Mo: 0.05 to 0.50%;
Sol.Al: 0.001 to 0.10%;
Ca: 0.0001 to 0.0050%;
Nb: 0.001 to 0.050%;
V: 0.01 to 0.10%; and
Ti: 0.005 to 0.030%.

3. The steel bend pipe according to claim 1 or 2, wherein the steel bend pipe satisfies following Formula (2) and Formula (3):

$$Hv_{10I} - Hv_{10M} \le 30 \ ... \ (2)$$

$$Hv_{10O} - Hv_{10M} \le 30 \ ... \ (3)$$

where meaning of each symbol in the above Formula (2) and Formula (3) is as follows:

$H_{V10I}$: Vickers hardness HV10, at a 1.5 mm depth position from an inner surface of the bent portion
$H_{V10M}$: Vickers hardness HV10, at a wall-thickness center position of the bent portion
$H_{V10O}$: Vickers hardness PHV10, at a 1.5 mm depth position from an outer surface of the bent portion, and
wherein the Vickers hardness is measured as described in the description.

4. The steel bend pipe according to any one of claims 1 to 3, wherein the steel bend pipe is a seamless steel pipe.

5. The steel bend pipe according to any one of claims 1 to 4, wherein the steel bend pipe has a wall thickness of 50 mm or less.

6. A method for producing the steel bend pipe according to claim 1, including following steps (1) to (4) to be performed in this order:

(1) a step of heating a steel pipe having a wall thickness of 30 mm or more and having the chemical composition according to claim 1 to a predetermined heating temperature of more than 1050°C to 1100°C or less at an average temperature rise rate of 10 to 30°C/s;
(2) a step of bending, immediately subsequent to the step of heating, the steel pipe such that a bending radius of the steel pipe is not less than three times an outer diameter of the steel pipe, to obtain the steel bend pipe;
(3) a step of cooling the steel bend pipe at an average cooling rate of 3°C/s or more in a temperature range of 800 to 500°C; and
(4) a step of performing heat treatment on the steel bend pipe for 70 minutes or more in a temperature range of more than 500°C to 600°C or less, and wherein, in the step (1), the steel pipe is heated for an overall length of the steel pipe.

7. The method for producing the steel bend pipe according to claim 6, wherein in the step (2), the steel pipe is bent such that a bending angle is 20° or more.

**Patentansprüche**

1. Gebogenes Stahlrohr, das einen geraden Rohrabschnitt und einen gebogenen Abschnitt mit einem Biegeradius von nicht weniger als dem Dreifachen des Außendurchmessers des geraden Rohrabschnitts aufweist und eine Wanddicke von 30 mm oder mehr hat, wobei das gebogene Stahlrohr folgende chemische Zusammensetzung umfasst, in Massenprozent:

C: 0,04 bis 0,08%;
Si: 0,05 bis 0,50%;
Mn: 1,00 bis 1,70%;
P: 0,015% oder weniger;
S: 0,002% oder weniger;
Cu: 0 bis 0,50%;
Ni: 0 bis 0,50%;
Cr: 0 bis 0,50%;
Mo: 0 bis 0,50%;
Sol.A1: 0 bis 0,10%;
Ca: 0 bis 0,0050%;
Nb: 0 bis 0,050%;
V: 0 bis 0,10%;
Ti: 0 bis 0,030%, und
den Rest: Fe und Verunreinigungen,

wobei Ceq, berechnet aus der folgenden Formel (1), 0,35% oder mehr beträgt, und
in dem geraden Rohrabschnitt und dem gebogenen Abschnitt eine Streckspannung 450 bis 600 MPa beträgt, und eine Vickershärte HV10 230 oder weniger beträgt:

$$Ceq = C + Mn/6 + (Cr + Mo + V) / 5 + (Cu + Ni) / 15 \dots (1)$$

wobei die Symbole der Elemente in der obigen Formel (1) die Gehalte der jeweiligen Elemente (in Massenprozent) bedeuten, und
die Vickershärte HV10 wie in der Beschreibung beschrieben gemessen wird.

2. Gebogenes Stahlrohr nach Anspruch 1, wobei die chemische Zusammensetzung eines oder mehrere Elemente enthält, die ausgewählt sind aus:

Cu: 0,05 bis 0,50%;
Ni: 0,05 bis 0,50%;
Cr: 0,05 bis 0,50%;

Mo: 0,05 bis 0,50%;
Sol.Al: 0,001 bis 0,10%;
Ca: 0,0001 bis 0,0050%;
Nb: 0,001 bis 0,050%;
V: 0,01 bis 0,10%; und
Ti: 0,005 bis 0,030%.

3. Gebogenes Stahlrohr nach Anspruch 1 oder 2, wobei das gebogene Stahlrohr die folgende Formel (2) und Formel (3) erfüllt:

$$Hv_{10I} - Hv_{10M} \leq 30 \ ... \ (2)$$

$$Hv_{10O} - Hv_{10M} \leq 30 \ ... \ (3)$$

wobei die Bedeutung der einzelnen Symbole in den obigen Formeln (2) und (3) wie folgt ist:

$H_{V10I}$: Vickershärte HV10 in einer 1,5 mm tiefen Position von der Innenfläche des gebogenen Abschnitts
$H_{V10M}$: Vickershärte HV10 an einer Position in der Mitte der Wanddicke des gebogenen Abschnitts
$H_{V10O}$: Vickershärte HV10 in einer 1,5 mm tiefen Position von einer äußeren Oberfläche des gebogenen Abschnitts, und

wobei die Vickershärte wie in der Beschreibung beschrieben gemessen wird.

4. Gebogenes Stahlrohr nach einem der Ansprüche 1 bis 3, wobei das gebogene Stahlrohr ein nahtloses Stahlrohr ist.

5. Gebogenes Stahlrohr nach einem der Ansprüche 1 bis 4, wobei das gebogene Stahlrohr eine Wandstärke von 50 mm oder weniger aufweist.

6. Verfahren zur Herstellung des gebogenen Stahlrohrs nach Anspruch 1, das die folgenden Schritte (1) bis (4) umfasst, die in dieser Reihenfolge durchzuführen sind:

(1) ein Schritt des Erwärmens eines Stahlrohrs mit einer Wandstärke von 30 mm oder mehr und mit der chemischen Zusammensetzung gemäß Anspruch 1 auf eine vorbestimmte Erwärmungstemperatur von mehr als 1050°C bis 1100°C oder weniger bei einer durchschnittlichen Temperaturanstiegsrate von 10 bis 30°C/s;
(2) einen Schritt des Biegens des Stahlrohrs unmittelbar im Anschluss an den Schritt des Erwärmens, so dass ein Biegeradius des Stahlrohrs nicht weniger als das Dreifache eines Außendurchmessers des Stahlrohrs beträgt, um das gebogene Stahlrohr zu erhalten;
(3) einen Schritt des Abkühlens des gebogenen Stahlrohrs mit einer durchschnittlichen Abkühlgeschwindigkeit von 3°C/s oder mehr in einem Temperaturbereich von 800 bis 500 °C; und
(4) einen Schritt des Durchführens einer Wärmebehandlung an dem gebogenen Stahlrohr für 70 Minuten oder mehr in einem Temperaturbereich von mehr als 500°C bis 600°C oder weniger, und wobei,

in dem Schritt (1) das Stahlrohr über eine Gesamtlänge des Stahlrohrs erwärmt wird.

7. Verfahren zur Herstellung des gebogenen Stahlrohrs nach Anspruch 6, wobei in dem Schritt (2) das Stahlrohr so gebogen wird, dass ein Biegewinkel 20° oder mehr beträgt.

**Revendications**

1. Tube en acier cintré qui inclut une partie de tube droite et une partie cintrée ayant un rayon de cintrage qui n'est pas inférieur à trois fois un diamètre extérieur de la partie de tube droite et a une épaisseur de paroi de 30 mm ou plus, le tube en acier cintré ayant une composition chimique comprenant, en pour cent de masse :

C : 0,04 à 0,08 % ;
Si: 0,05 à 0,50 % ;

Mn : 1,00 à 1,70 % ;
P : 0,015 % ou moins ;
S : 0,002 % ou moins ;
Cu : 0 à 0,50 % ;
Ni: 0 à 0,50 % ;
Cr: 0 à 0,50 % ;
Mo: 0 à 0,50 % ;
Sol.Al : 0 à 0,10 % ;
Ca : 0 à 0,0050 % ;
Nb : 0 à 0,050 % ;
V: 0 à 0,10 % ;
Ti : 0 à 0,030%, et
le solde : Fe et des impuretés,
sachant que Ceq calculé à partir de la Formule (1) ci-après est de 0,35 % ou plus, et
dans la partie de tube droite et la partie cintrée, une contrainte d'élasticité est de 450 à 600 MPa, et une dureté Vickers HV10 est de 230 ou moins :

$$Ceq = C + Mn/6 + (Cr + Mo + V)/5 + (Cu + Ni)/15 \dots (1)$$

où les symboles des éléments dans la Formule (1) ci-dessus représentent des teneurs des éléments respectifs (en pour cent de masse), et
la dureté Vickers HV10 est mesurée comme décrit dans la description.

2. Le tube en acier cintré selon la revendication 1, sachant que la composition chimique contient un ou plusieurs éléments sélectionnés parmi :

Cu : 0,05 à 0,50 % ;
Ni : 0,05 à 0,50 % ;
Cr : 0,05 à 0,50 % ;
Mo : 0,05 à 0,50 % ;
Sol.Al : 0,001 à 0,10% ;
Ca : 0,0001 à 0,0050 % ;
Nb : 0,001 à 0,050 % ;
V: 0,01 à 0,10% ; et
Ti : 0,005 à 0,030 %.

3. Le tube en acier cintré selon la revendication 1 ou 2, sachant que le tube en acier cintré satisfait à la Formule (2) et à la Formule (3) ci-après :

$$Hv_{10I} - Hv_{10M} \leq 30 \dots (2)$$

$$Hv_{10O} - Hv_{10M} \leq 30 \dots (3)$$

où la signification de chaque symbole dans la Formule (2) et la Formule (3) ci-dessus est comme suit :

$H_{V10I}$ : dureté Vickers HV10, à une position de profondeur de 1,5 mm à partir d'une surface intérieure de la partie cintrée ;
$H_{V10M}$ : dureté Vickers HV10, à une position médiane d'épaisseur de paroi de la partie cintrée ;
Hvioo : dureté Vickers HV10, à une position de profondeur à partir d'une surface extérieure de la partie cintrée, et sachant que la dureté Vickers est mesurée comme décrit dans la description.

4. Le tube en acier cintré selon l'une quelconque des revendications 1 à 3, sachant que le tube en acier cintré est un tube en acier sans soudure.

5. Le tube en acier cintré selon l'une quelconque des revendications 1 à 4, sachant que le tube en acier cintré a une épaisseur de paroi de 50 mm ou moins.

6.  Procédé de production du tube en acier cintré selon la revendication 1, incluant les étapes (1) à (4) ci-après devant être effectuées dans cet ordre :

> (1) une étape de chauffage d'un tube en acier ayant une épaisseur de paroi de 30 mm ou plus et ayant la composition chimique selon la revendication 1 à une température de chauffage prédéterminée de plus de 1050 °C à 1100 °C ou moins à un taux de montée en température moyen de 10 à 30 °C/s ;
> (2) une étape de cintrage, immédiatement subséquente à l'étape de chauffage, du tube en acier de telle sorte qu'un rayon de cintrage du tube en acier ne soit pas inférieur à trois fois un diamètre extérieur du tube en acier, pour obtenir le tube en acier cintré ;
> (3) une étape de refroidissement du tube en acier cintré à un taux de refroidissement moyen de 3 °C/s ou plus dans une plage de température de 800 à 500 °C ; et
> (4) une étape d'exécution d'un traitement thermique sur le tube en acier cintré pendant 70 minutes ou plus dans une plage de température de plus de 500 °C à 600 °C ou moins, et sachant que,

> à l'étape (1), le tube en acier est chauffé sur une longueur totale du tube en acier.

7.  Le procédé de production du tube en acier cintré selon la revendication 6, sachant qu'à l'étape (2), le tube en acier est cintré de telle sorte qu'un angle de cintrage soit de 20° ou plus.

[Figure 1]

[Figure 2]

**REFERENCES CITED IN THE DESCRIPTION**

**Patent documents cited in the description**

- WO 2008139639 A
- WO 2008007737 A
- JP 2008249010 A
- JP 7003330 A
- JP 6330169 A
- JP 4154913 A
- JP H0892649 A
- WO 9316823 A